# EUROPEAN PATENT APPLICATION

(11) **EP 4 696 910 A1**
(43) Date of publication of application: **18.02.2026**
(21) Application number: 24855840.5
(22) Date of filing: 21.08.2024
(51) Int. Cl.: F16K 27/00, F16K 27/10, F16L 13/02

(54) **PILOT VALVE AND SWITCHING VALVE**

(30) Priority: 23.08.2023 CN 202322283753 U
(71) Applicant: Zhejiang Dunan Artificial Environment Co., Ltd., Shaoxing Zhejiang 311835 (CN)
(72) Inventor: DING, Haihu, Shaoxing, Zhejiang 311835 (CN); CAI, Bin, Shaoxing, Zhejiang 311835 (CN)
(74) Representative: Petraz, Gilberto Luigi
(86) International application number: PCT/CN2024/113658
(87) International publication number: WO 2025/040118

(57) **Abstract**

A pilot valve and a switching valve. The pilot valve includes a valve body (1) and an inlet pipe (2) having an end plugged into the valve body (1). A snap-fit part is formed on either or both of the valve body (1) and the inlet pipe (2) and located at a plug-in position between the inlet pipe (2) and the valve body (1), and the snap-fit part is configured for allowing a welding ring (3) to be snapped into.

## Description

### CROSS-REFERENCE TO RELATED APPLICATION

This application claims priority to Chinese patent application No. 202322283753.5, filed on August 23, 2023, and titled "PILOT VALVE AND SWITCHING VALVE". The content of the above identified application is hereby incorporated herein in its entirety by reference.

### TECHNICAL FIELD

The present application relates to the field of valves, and in particular, to a pilot valve and a switching valve.

### BACKGROUND

Switching valves are required in air-conditioning equipment to switch flow direction of a refrigerant. A switching valve typically includes a main valve and a pilot valve in communication with the main valve via a capillary tube. The pilot valve is configured to control movement of a reversing structure in the main valve, thereby achieving control over a flow direction of refrigerant in the main valve.

The pilot valve includes a valve body and an inlet pipe. The inlet pipe needs to be brazed to the valve body. In the brazing process, a welding ring is sleeved over the inlet pipe and placed on the valve body. When the welding ring is melted, the welding ring expands under stress, causing melted solder to be positioned relatively far from a connection between the inlet pipe and the valve body. As a result, the solder is not easy to flow into the connection between the inlet pipe and the valve body, leading to an insecure connection between the inlet pipe and the valve body.

### SUMMARY

According to various embodiments of the present application, a pilot valve and a switching valve are provided.

The present application provides a pilot valve and a switching valve. The pilot valve includes a valve body and an inlet pipe having an end plugged into the valve body. A snap-fit part is formed on either or both of the valve body and the inlet pipe and located at a plug-in position between the inlet pipe and the valve body. The snap-fit part is configured for allowing a welding ring to be snapped into.

In an embodiment, the snap-fit part is configured as an annular snap groove. This configuration facilitates processing of the annular snap groove, thereby simplifying the processing of the snap-fit part. In addition, since each of the annular snap groove and the welding ring has an annular shape, the contact area therebetween can be increased. This results in a superior restraining effect of the annular snap groove on the welding ring.

In an embodiment, an opening is provided at a side of the annular snap groove away from the end of the inlet pipe plugged into the valve body. The welding ring is configured to be snapped into the annular snap groove through the opening along an axial direction of the inlet pipe after the inlet pipe is plugged into the valve body.

In an embodiment, the valve body is provided with a mounting hole, the inlet pipe is plugged into the mounting hole, the annular snap groove is disposed at an orifice of the mounting hole, and the annular snap groove is coaxially disposed with the mounting hole.

In an embodiment, the valve body includes an end wall and a mounting wall extending from the end wall into an interior of the valve body. The mounting hole is formed in the mounting wall, and the annular snap groove is disposed between the mounting wall and the end wall.

In an embodiment, an annular transition wall is provided between the mounting wall and the end wall. Two ends of the annular transition wall blend smoothly into the mounting wall and the end wall respectively. A portion of the annular transition wall between the two ends is recessed toward the interior of the valve body to form the annular snap groove.

In an embodiment, the end wall, the mounting wall, and the annular transition wall are formed integrally by stamping.

In an embodiment, a cross-section of the annular snap groove includes an arc-shaped segment, and a size of the arc-shaped segment is equal to or less than a wire size of the welding ring.

In an embodiment, the valve body is provided with a mounting hole, the inlet pipe is plugged into the mounting hole, the annular snap groove is formed on the inlet pipe, and a side wall of the mounting hole is configured to radially restrict the welding ring located in the annular snap groove.

The switching valve includes the pilot valve described above.

Details of one or more embodiments of the present application are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those inventions disclosed herein, reference may be made to one or more attached drawings. Additional details or examples used to describe the drawings should not be considered as limiting the scope of any of the disclosed inventions, currently described embodiments and/or examples, and currently understood best modes of these inventions.
FIG. 1 is a schematic structural diagram of a pilot valve according to the present application.
FIG. 2 is an enlarged view of part A of the pilot valve in FIG. 1.
FIG. 3 is a partial enlarged view of the pilot valve according to the present application with no welding ring placed.
FIG. 4 is a partial enlarged view of another embodiment of the pilot valve according to the present application.

In the drawings: 1 represents a valve body; 11 represents an annular snap groove; 12 represents an opening; 13 represents a mounting hole; 14 represents a housing; 15 represents an end wall; 16 represents a mounting wall; 17 represents an annular transition wall; 18 represents an arc-shaped segment; 19 represents a restricting part; 2 represents an inlet pipe; 21 represents a large-size segment; 22 represents a transition segment; 23 represents a small-size segment; 3 represents a welding ring; 4 represents a filter screen; 5 represents a valve seat; and 6 represents a capillary tube.

### DETAILED DESCRIPTION

The technical solutions of the present application will be described clearly and completely with reference to embodiments. The embodiments as described are merely some rather than all of the embodiments of the present application. All other embodiments obtained by one skilled in the art on the basis of the embodiments in the present application without involving any inventive effort fall within the protection scope of the present application.

In the description of the present application, it should be noted that orientations or positional relationships indicated by terms such as "center", "upper", "lower", "left", "right", "vertical", "horizontal", "inner", and "outer" are based on the orientations or positional relationships shown in the drawings, which are merely for the convenience of describing the present application and simplifying the description, and do not indicate or imply that the referred apparatus or element must have a specific orientation, be constructed and operated in a specific orientation, and therefore cannot be understood as a limitation on the present disclosure. In addition, terms such as "first", "second", and "third" are merely used for descriptive purposes, and cannot be understood as indicating or implying relative importance.

In the description of the present application, it should be noted that, unless otherwise specified and defined, terms such as "mounting", "coupling", and "connection" should be interpreted broadly as, for example, a fixed connection, a detachable connection, or an integral connection; a mechanical connection, or an electrical connection; a direct connection, an indirect connection through an intermediate medium; or an internal communication between two elements. For those skilled in the art, specific meanings of the foregoing terms in the present application may be understood according to specific situations.

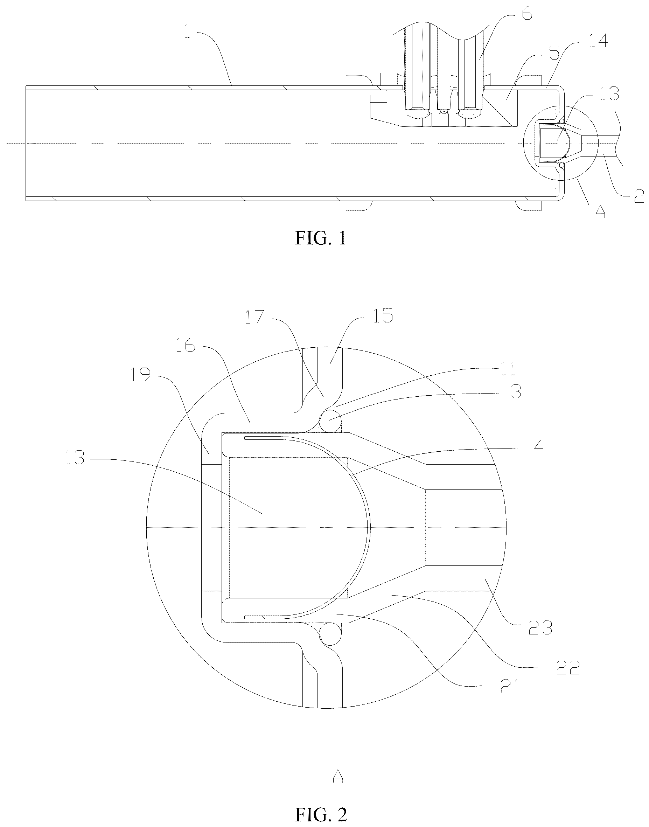

Referring to FIG. 1 to FIG. 4, a pilot valve is provided in this embodiment. The pilot valve includes a valve body 1 and an inlet pipe 2 having an end plugged into the valve body 1.

Specifically, the valve body 1 may be provided with a mounting hole 13 configured to make an inner side and an outer side of the valve body 1 in communication with each other. The inlet pipe 2 may be plugged into the mounting hole 13 to achieve a plug-in connection between the valve body 1 and the inlet pipe 2. Alternatively, a cylindrical protrusion (not shown) may be provided on an outer sidewall of the valve body 1, and the mounting hole 13 may be located in the protrusion. The mounting hole 13 may make the inner side and the outer side of the valve body 1 in communication with each other, and the protrusion may be plugged into the inlet pipe 2 to achieve a plug-in connection between the valve body 1 and the inlet pipe 2.

Referring to FIG. 2 to FIG. 4, a snap-fit part is formed on either or both of the valve body 1 and the inlet pipe 2 and located at a plug-in position between the inlet pipe 2 and the valve body 1. The snap-fit part is configured for allowing a welding ring 3 to be snapped into.

Specifically, the snap-fit part may be formed on the valve body 1, or may be formed on the inlet pipe 2, or may be formed cooperatively by the valve body 1 and the inlet pipe 2. By snapping the welding ring 3 with the snap-fit part, the welding ring 3 may be limited by the snap-fit part in a brazing process, and thus deformation and movement of the welding ring 3 under stress can be limited, and the welding ring 3 can be melted in the snap-fit part. In addition, since the snap-fit part is located at the plug-in position between the inlet pipe 2 and the valve body 1, solder formed from the melted welding ring 3 is positioned at the plug-in position between the inlet pipe 2 and the valve body 1. This allows the solder to readily enter between the inlet pipe 2 and the valve body 1 by capillary action, thereby enhancing stability of the connection between the inlet pipe 2 and the valve body 1.

In an embodiment, referring to FIG. 2 to FIG. 4, the snap-fit part may be configured as an annular snap groove 11. The term "annular" here indicates a shape with connected ends forming a closed shape. This configuration makes the annular snap groove 11 easy to manufacture, thereby facilitating processing of the snap-fit part. In addition, the shape of the annular snap groove 11 closely matches with that of the welding ring 3. This configuration provides a large contact area between the annular snap groove 11 and the welding ring 3, and enables the annular snap groove 11 to limit the welding ring 3 along its entire circumference, resulting in superior limiting performance on the welding ring 3.

Specifically, the snap-fit part may also be provided as a snap groove in other shapes, such as a U-shaped groove; or as other snap structures, as long as it can limit the welding ring 3 and prevent the welding ring 3 from moving away from the plug-in position due to stress during welding.

In an embodiment, referring to FIG. 2 to FIG. 4, an opening 12 may be provided at a side of the annular snap groove 11 away from the end of the inlet pipe 2 plugged into the valve body 1. That is, when the inlet pipe 2 is plugged into the valve body 1, the opening 12 is located at the side away from an interior of the valve body 1. The welding ring 3 may be moved along an axial direction of the inlet pipe 2 and snapped into the annular snap groove 11 from the opening 12 of the inlet pipe 2. Specifically, by providing the opening 12, the welding ring 3 can be moved along an axial direction of the inlet pipe 2 and snapped into the snap groove after the inlet pipe 2 is plugged into the valve body 1 by an operator. That is, the welding ring 3 does not need to be snapped into the snap groove simultaneously with the plugging of the inlet pipe 2 into the valve body 1, thereby simplifying the operation.

In an embodiment, referring to FIG. 2 to FIG. 4, the valve body 1 may be provided with a mounting hole 13, and the inlet pipe 2 may be plugged into the mounting hole 13. When the valve body 1 has a relatively great wall thickness, the mounting hole 13 may be directly formed in the valve body 1 and have a hole depth equal to the wall thickness. When the valve body 1 has a relatively small wall thickness, the valve body 1 may be recessed inward to form the mounting hole 13 and the mounting hole 13 may have a hole depth independent of the wall thickness. In this embodiment, the valve body 1 may be made of steel material and has a relatively small wall thickness. The valve body 1 may be recessed inward to form the mounting hole 13, and the inlet pipe 2 may be plugged into the mounting hole 13.

In an embodiment, referring to FIG. 2 to FIG. 4, the valve body 1 may include a housing 14, an end wall 15, and a mounting wall 16. The housing 14 may have a hollow columnar shape, and the end wall 15 may be located at one end of the housing 14 and connected to the housing 14. The mounting hole 13 may be provided on the housing 14 or on the end wall 15. In this embodiment, the mounting wall 16 may extend from the end wall 15 into an interior of the valve body 1, and the mounting hole 13 may be formed in the mounting wall 16.

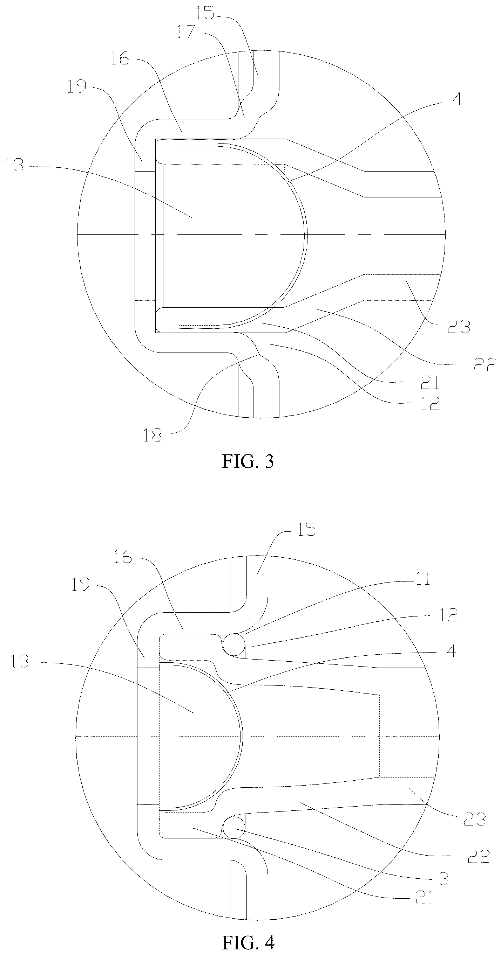

In an embodiment, referring to FIG. 2 and FIG. 3, the annular snap groove 11 may be disposed on the valve body 1, and the annular snap groove 11 may be disposed at an orifice of the mounting hole 13. In this embodiment, the annular snap groove 11 is disposed between the mounting wall 16 and the end wall 15, which facilitates the processing. In addition, the annular snap groove 11 may be coaxially disposed with the mounting hole 13, thereby ensuring close contact between the welding ring 3 and an outer wall of the inlet pipe 2 plugged into the mounting hole 13, and thus the solder can flow or enter a slit between the inlet pipe 2 and the mounting hole 13.

The mounting hole 13 may be configured as a stepped hole, with an annular snap groove 11 formed at a step portion thereof. Alternatively, an annular transition wall 17 may be provided between the mounting wall 16 and the end wall 15. Two ends of the annular transition wall 17 may blend smoothly into the mounting wall 16 and the end wall 15 respectively, and a portion of the annular transition wall 17 between the two ends may be recessed toward the interior of the valve body 1 to form an annular snap groove 11. The annular transition wall 17 with the annular snap groove 11 is a smooth curved wall, and the annular transition wall 17 blends smoothly into the mounting wall 16 and the end wall 15, which can avoid stress concentration and prolong the service life of the valve body 1.

In one embodiment, referring to FIGs. 2 and 3, the end wall 15, the mounting wall 16, and the annular transition wall 17 may be formed integrally by stamping. The processing of the end wall 15, the mounting wall 16, the annular transition wall 17, and the annular snap groove 11 on the annular transition wall 17 can be completed by the stamping. In addition, the housing 14 can be formed integrally with the end wall 15, the mounting wall 16, and the annular transition wall 17 by the stamping. This integrated design enhances the overall connection stability of the valve body 1, while also offering advantages in processing and low production costs.

In an embodiment, referring to FIG. 2 and FIG. 3, a cross-section of the annular snap groove 11 may include an arc-shaped segment 18. A plane containing the cross-section may be any plane that contains a central axis of the annular snap groove 11. The welding ring 3 may be snapped into the arc-shaped segment 18, and the arc-shaped segment 18 may be configured to contact an outer wall of the welding ring 3. The arc-shaped segment 18 allows the annular snap groove 11 to fit more closely with the welding ring 3, thereby increasing the contact area and improving restraining effect on the welding ring 3. In addition, the arc-shaped segment 18 allows for a reduction in a size of the annular snap groove 11, facilitating the flow of more solder into the connection between the inlet pipe 2 and the valve body 1. A size of the arc-shaped segment 18 may be equal to or less than a size of the welding ring 3, which is beneficial to improving the snapping effect on the welding ring 3. So that the welding ring 3 can be prevented from being separated after being snapped into the annular snap groove 11.

In an embodiment, referring to FIG. 2 to FIG. 4, an end of the mounting wall 16 extending into the interior of the valve body 1 may be bent toward the axis of the mounting hole 13 to form a restricting part 19. The restricting part 19 may be configured to abut against the inlet pipe 2 inserted into the mounting hole 13, thereby limiting a length of a part of the inlet pipe 2 plugged into the mounting hole 13. The restricting part 19 may have an annular shape and a through hole in the middle of the restricting part 19. The through hole may be configured for achieve a communication between the interior of the valve body 1 and the inlet pipe 2. A filter screen 4 may be further disposed in the mounting hole 13. The filter screen 4 may be positioned inside the inlet pipe 2, and configured to filter impurities from the fluid entering the valve body 1 from the inlet pipe 2. The restricting part 19 may also abut against and restrict the filter screen 4. An aperture of the through hole may be less than an inner size of the end of the inlet pipe 2, so that the restricting part 19 can effectively restrict both the inlet pipe 2 and the filter screen 4.

In an embodiment, referring to FIG. 2 and FIG. 3, the inlet pipe 2 may include a large-size segment 21, a transition segment 22, and a small-size segment 23. A size of the large-size segment 21 may be greater than that of the small-size segment 23, and the transition segment 22 may be located between the large-size segment 21 and the small-size segment 23 and connected to the large-size segment 21 and the small-size segment 23. The large-size segment 21 may be configured to be plugged into the mounting hole 13. An inner size of the welding ring 3 may be equal to or greater than an outer size of the large-size segment 21. The annular snap groove 11 may be disposed corresponding to the large-size segment 21, and the filter screen 4 may be disposed in the large-size segment 21.

In one embodiment, referring to FIG. 4, the annular snap groove 11 may be formed on the inlet tube 2. Specifically, the valve body 1 may be provided with a mounting hole 13, and the inlet pipe 2 may be plugged into the mounting hole 13. The annular snap groove 11 may be formed on a side wall of the inlet pipe 2, and the side wall of the mounting hole 13 may be configured to radially restrict the welding ring 3 located in the annular snap groove 11. As the annular snap groove 11 is provided on the inlet pipe 2, after the inlet pipe 2 is plugged into the mounting hole 13 on the valve body 1, an outer side of the welding ring 3 can be restricted by the side wall of the mounting hole 13. This configuration prevents the welding ring 3 from expanding outward due to stress during melting, while also facilitating the flow of the molten solder of the welding ring 3 into the slit between the mounting hole 13 and the inlet pipe 2.

Specifically, referring to FIG. 4, the annular snap groove 11 may be configured in a manner that: the inlet pipe 2 may include a large-size segment 21, a transition segment 22 and a small-size segment 23. A size of the large-size segment 21 is greater than that of the small-size segment 23, and the transition segment 22 is located between the large-size segment 21 and the small-size segment 23 and connected to the large-size segment 21 to the small-size segment 23. The transition segment 22 may be recessed toward the interior of the inlet pipe 2 to form the annular snap groove 11. A size of the annular snap groove 11 may be greater than that of the small-size segment 23, so that the welding ring 3 can be snapped into the annular snap groove 11 along the axial direction of the inlet pipe 2 from the small-size segment 23. The large-size segment 21 and the transition segment 22 containing the annular snap groove 11 may be plugged into the mounting hole 13, so that the outer side of the welding ring 3 can be effectively restricted by the side wall of the mounting hole 13.

In an embodiment, referring to FIG. 1, the pilot valve may further includes a valve seat 5 and a plurality of capillary tubes 6. The valve seat 5 may be disposed in the valve body 1 and welded to the housing 14. One end of each of the capillary tubes 6 may pass through the housing 14 and be welded to the valve seat 5.

The present application further provides a switching valve. The switching valve may include the above pilot valve.

It should be noted that the foregoing embodiments are merely intended to describe, rather than limit, the technical solutions of the present application. Although the present application has been described in detail with reference to the foregoing embodiments, those skilled in the art should understand that the technical solutions in the preceding embodiments may still be modified, or all or parts of the technical features thereof can be equivalently substituted.. However, such modifications or substitutions do not depart from the scope of the technical solutions of the embodiments of the present application.

The technical features of the above-mentioned embodiments can be combined arbitrarily. In order to make the description concise, not all possible combinations of the technical features are described in the above embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be noted that, for one of ordinary skill in the art, several modifications and improvements may be made without departing from the concept of the present application, which all fall within the protection scope of the present application. Therefore, the protection scope of the present application shall be defined by the appended claims.

## Claims

1. A pilot valve, comprising a valve body and an inlet pipe having an end plugged into the valve body, **characterized in that** a snap-fit part is formed on either or both of the valve body and the inlet pipe and located at a plug-in position between the inlet pipe and the valve body, and the snap-fit part is configured for allowing a welding ring to be snapped into.

2. The pilot valve of claim 1, wherein the snap-fit part is configured as an annular snap groove.

3. The pilot valve of claim 2, wherein an opening is provided at a side of the annular snap groove away from the end of the inlet pipe plugged into the valve body, and the welding ring is configured to be snapped into the annular snap groove through the opening along an axial direction of the inlet pipe after the inlet pipe is plugged into the valve body.

4. The pilot valve of claim 3, wherein the valve body is provided with a mounting hole, the inlet pipe is plugged into the mounting hole, the annular snap groove is disposed at an orifice of the mounting hole, and the annular snap groove is coaxially disposed with the mounting hole.

5. The pilot valve of claim 4, wherein the valve body comprises an end wall and a mounting wall extending from the end wall into an interior of the valve body, the mounting hole is formed in the mounting wall, and the annular snap groove is disposed between the mounting wall and the end wall.

6. The pilot valve of claim 5, wherein an annular transition wall is provided between the mounting wall and the end wall, two ends of the annular transition wall blend smoothly into the mounting wall and the end wall respectively, and a portion of the annular transition wall between the two ends is recessed toward the interior of the valve body to form the annular snap groove.

7. The pilot valve of claim 6, wherein the end wall, the mounting wall, and the annular transition wall are formed integrally by stamping.

8. The pilot valve of any one of claims 2 to 7, wherein a cross-section of the annular snap groove comprises an arc-shaped segment, and a size of the arc-shaped segment is equal to or less than a wire size of the welding ring.

9. The pilot valve of claim 3, wherein the valve body is provided with a mounting hole, the inlet pipe is plugged into the mounting hole, the annular snap groove is formed on the inlet pipe, and a side wall of the mounting hole is configured to radially restrict the welding ring located in the annular snap groove.

10. A switching valve comprising the pilot valve of any one of claims 1 to 9.
